# EUROPÄISCHE PATENTANMELDUNG

(11) **EP 0 748 647 A1**
(43) Veröffentlichungstag der Anmeldung: **18.12.1996**
(21) Anmeldenummer: 96810337.4
(22) Anmeldetag: 28.05.1996
(51) Int. Cl.: B01D 45/06, B01D 45/00

(54) **Verfahren und Vorrichtung zur Reduktion des Staubgehaltes der Abgase eines Dampferzeugers**

(30) Priorität: 12.06.1995 DE 19521321
(71) Anmelder: ABB Management AG, 5401 Baden (CH)
(72) Erfinder: Ziegler, Georg, 8404 Winterthur (CH)

(57) **Zusammenfassung**

Bei einem Verfahren und einer Vorrichtung zur Reduktion des Staubgehaltes der Abgase (18) eines Dampferzeugers, welcher aus einer Brennkammer (1), einem Strahlungsteil (2) und einem Konvektionsteil (3) besteht und mindestens zwei vertikale Gaszüge (4, 5) aufweist, wird der Staubanteil der Abgase (18) vor dem Eintritt der Abgase (18) in den konvektiven Teil (3) des Dampferzeugers reduziert. Im Bereich der Gasumlenkung vom vertikalen Zug (4) mit Abwärtsströmung zum vertikalen Zug (5) mit Aufwärtsströmung sind die Frontwand (7) und/oder die Rückwand (8) des Dampferzeugers doppelwandig ausgebildet, wobei die äussere Wand (12) aus einer bekannten gasdichten Rohr-Steg-Rohr-Konstruktion (13) und die innere Wand (14) aus Rohren (15) besteht, die so angeordnet sind, dass zwischen den Rohren (15) jeweils ein durchströmbarer Zwischenraum (16) vorhanden ist, wobei von der äusseren Wand (12) und der inneren Wand (14) eine strömungsberuhigte Zone (17) begrenzt ist und wobei die innere (14) und die äussere Wand (12) mittels die Rohre durchstömenden Kühlfluids gekühlt werden.

## Beschreibung

### Technisches Gebiet

Die Erfindung betrifft ein Verfahren und eine Vorrichtung zur Reduktion des Staubgehaltes der Abgase eines Dampferzeuers, welcher aus einer Brennkammer, einem Strahlungsteil und einem Konvektionsteil besteht und welcher mindestens zwei sich an die Brennkammer anschliessende vertikale Gaszüge aufweist.

### Stand der Technik

Zur Zeit werden als Kessel für Kehrrichtverbrennungsanlagen (KVA) in mitteleuropäischen Ländern bevorzugt Dackelkessel verwendet, bei denen das aus der Brennkammer strömende Gas über einen ersten Leerzug mit Abwärtsströmung in einen zweiten Leerzug mit Aufwärtströmung und anschliessend in einen horizontalen Bündelzug strömt. Neben diesen horizontalen Dampferzeugern sind auch vertikale Dampferzeuger für Kehrrichtverbrennungsanlagen bekannt, welche meist in 3- oder 4-Zugbauweise ausgeführt sind (K. J. Thomé-Kozmiensky: Thermische Abfallbehandlung. EF-Verlag für Energie- und Umwelttechnik GmbH, 1994, S. 390-402).

Bisher wird der Staubabscheidung in diesen Kesseln wenig Beachtung geschenkt. Man legt lediglich Wert auf eine betriebssichere Abführung des Staubes, der durch Abreinigung oder durch Abplatzen von den Wänden fällt.

Aus der Brennkammer wird bei der KVA-Feuerung aber relativ viel Staub (2-5 g/Nm³) mitgerissen. Dieser hohe Staubanteil ist unerwünscht, denn er verursacht folgende Probleme:
- Der Staub lagert sich an den Heizflächen an, so dass diese entsprechend überdimensioniert werden müssen. Ausserdem müssen sie so gebaut werden, dass sie durch Klopfen oder Russblasen gereinigt werden können.
- In der dem Kessel nachgeschalteten Gasreinigungsanlage müssen für die Entstaubung teure Elektro-Filter und Wäscher eingesetzt werden.
- Im horizontalen Teil des Kessels begünstigt der abgelagerte Staub katalytisch die Bildung von Dioxin. Diese Reaktion (Denovo-Synthese) läuft ab, wenn Gas mit Sauerstoff und Chloranteilen bei einer Temperatur zwischen 250 und 500°C und einer Verweilzeit von mehreren Sekunden mit einem Katalysator (im vorliegenden Falle wirkt der Staub als Katalysator) in Berührung kommt. Rauchgas und Staub, die nach der Verbrennung praktisch dioxinfrei vorliegen, werden durch diese Denovo-Synthese unterhalb von 500°C wieder dioxinhaltig.
- Die Deponie von dioxinhaltigem Staub ist ein teures Umweltproblem.
- Die Reinigung der dioxinhaltigen Abgase ist sehr aufwendig.

In neueren Ausschreibungen wird ein Staubgehalt der Rohgase von 1-2 g/Nm³ gefordert, der mit feuerungstechnischen Massnahmen allein nicht mehr einzuhalten ist. Für eine "high dust-SCR (Selective Catalytic Reduction)"-Anlage (NOx-Katalysatoren sind vor der Rauchgasreinigung und vor dem Elektro-filter angeordnet) wird sogar ein Staubgehalt <1g/Nm³ gefordert, da aufgrund dieser Anordnung der Rauchgasentstickungs-Reaktor mit Staub belastet wird und nur verkürzte Standzeiten aufweist.

### Darstellung der Erfindung

Die Erfindung versucht, all diese Nachteile zu vermeiden. Ihr liegt die Aufgabe zugrunde, ein Verfahren und eine Vorrichtung zur Reduktion des Staubanteils der staubhaltigen Abgase eines Dampferzeugers, beispielsweise eines Kessels für Kehrrichtverbrennungsanlagen zu entwickeln, wobei der Dampferzeuger mindestens zwei sich an den Brennraum anschliessende vertikale Gaszüge aufweist, bei denen mit relativ einfachen Mitteln ein deutlich reduzierter Staubgehalt der Abgase erzielt wird und die sich problemlos auch bei schon bestehenden Anlagen anwenden lassen.

Erfindungsgemäss wird dies bei einem Verfahren gemäss Oberbegriff des Patentanspruches 1 dadurch erreicht, dass die Reduktion des Staubanteiles der Abgase vor dem Eintritt der Abgase in den konvektiven Teil des Dampferzeugers erfolgt, wobei im Bereich der Gasumlenkung vom vertikalen Zug mit Abwärtsströmung zum vertikalen Zug mit Aufwärtsströmung durch Schaffung von strömungsberuhigten Zonen die Abscheidung des Staubes verbessert wird und der Staub aus diesem Bereich abgeführt wird.

Erfindungsgemäss wird dies bei einem Dampferzeuger gemäss Oberbegriff des Vorrichtungsanspruches dadurch erreicht, dass im Bereich der Gasumlenkung vom vertikalen Zug mit Abwärtsströmung zum vertikalen Zug mit Aufwärtsströmung die Frontwand und/oder die Rückwand des Dampferzeugers doppelseitig ausgebildet sind, wobei die äussere Wand aus einer bekannten gasdichten Rohr-Steg-Rohr-Konstruktion und die innere Wand aus Rohren besteht, die so angeordnet sind, dass zwischen den Rohren jeweils ein durchströmbarer Zwischenraum vorhanden ist, wobei von der äusseren Wand und der inneren Wand eine strömungsberuhigte Zone begrenzt ist und wobei die innere und die äussere Wand mittels die Rohre durchstömenden Kühlfluids gekühlt werden.

Die Vorteile der Erfindung bestehen unter anderem darin, dass im Bereich der Gasumlenkung die Staubabscheidung begünstigt und der einmal abgeschiedene Staub nicht mehr mitgerissen wird. Da der Staubgehalt der Abgase reduziert wird, bevor die Gase in den konvektiven Teil des Kessels eintreten, wird die katalytische Bildung von Dioxin reduziert. Ausserdem verringert sich der Reinigungsaufwand an den Heizflächen und in der Gasreinigungsanlage, die dem Kessel nachgeschaltet ist.

Es ist besonders zweckmässig, wenn die innere und die äussere Wand im Umlaufsystem des Dampferzeugers integriert sind und durch verdampfendes Wasser gekühlt werden, weil dadurch ein zusätzlicher separater Kühlkreislauf unnötig ist.

Ferner ist es vorteilhaft, wenn an der inneren Wand annähernd senkrecht zur Strömungsrichtung Schikanenbleche angebracht sind, weil dadurch die Abscheidung des Staubes verbessert wird.

Schliesslich werden mit Vorteil an der inneren Wand Leitbleche so angebracht, dass in der strömungsberuhigten Zone eine Gasströmung in Richtung Staubaustritt entsteht. Dadurch wird der Staubaustrag intensiviert.

Weiterhin ist es zweckmässig, wenn die Trennwand zwischen dem vertikalen Zügen in Richtung des vertikalen Zuges mit Abwärtsströmung abgewinkelt ist, weil dadurch die Strömung stärker an der inneren Wand entlangführt und die Staubabscheidung verbessert wird.

Ausserdem ist es vorteilhaft, wenn am in Strömungsrichtung gesehenen Ende der Rückwand die innere Wand nach innen ausgekröpft ist und im oberen Teil über eine gasdichte Rohr-Steg-Konstruktion (13) mit der äusseren Wand verbunden ist, so dass sich eine Staubfangtasche bildet.

### Kurze Beschreibung der Zeichnung

In der Zeichnung sind Ausführungsbeispiele der Erfindung anhand eines Dampferzeugers mit zwei vertikalen Leer zügen und einem horizontalen Bündelzug sowie anhand eines vertikalen Dampferzeugers, wie diese oft für Kehrrichtverbrennunsanlagen eingesetzt werden, dargestellt.

Es zeigen:
- Fig. 1: einen Teillängsschnitt des erfindungsgemässen Dampferzeugers mit horizontalem Bündelzug:
- Fig. 2: einen Schnitt im Bereich der Gasumlenkung in den Leerzügen entlang der Linie II-II in Fig. 1;
- Fig. 3: ein Detail im Bereich des Staubaustrages (zwei andere Varianten - Fig. 3a und 3b - zur Anordnung der Bleche an den Rohren der inneren Wand als in Fig. 1 und Fig. 3c eine Draufsicht auf Fig. 3b);
- Fig. 4: ein Detail im Bereich des Staubaustrages (andere Rohrführung der inneren Wand als in Fig. 1);
- Fig. 5: ein Detail im Bereich des Staubaustrages (Anordnung einer Staubfangtasche);
- Fig. 6: einen Teillängsschnitt des erfindungsgemässen vertikalen Dampferzeugers.

Es sind nur die für das Verständnis der Erfindung wesentlichen Elemente gezeigt. Nicht dargestellt sind von der Anlage beispielsweise der Verbrennungsrost und das Entschlackungssystem. Die Strömungsrichtung der Medien ist mit Pfeilen bezeichnet.

### Weg zur Ausführung der Erfindung

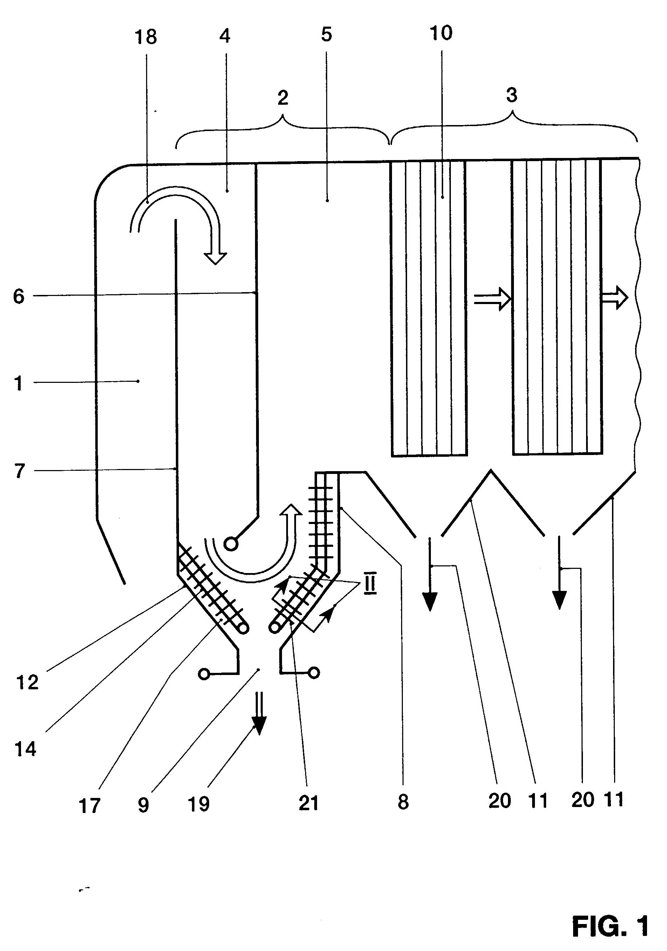

Nachfolgend wird die Erfindung anhand von Ausführungsbeispielen und der Fig. 1 bis 6 näher erläutert.

Fig. 1 zeigt einen Teillängsschnitt eines Kessels mit Naturumlaufsystem für eine Kehrrichtverbrennunsanlage. Der Kessel ist ein sogenannter Dackelkessel, der aus einer Brennkammer 1, einem Strahlungsteil 2 und einem Konvektionsteil 3 besteht. Der Strahlungsteil 2 besitzt in diesem Ausführungsbeispiel einen ersten vertikalen Leerzug 4 und einen zweiten vertikalen Leerzug 5, wobei die beiden Züge 4, 5 durch eine im wesentlichen vertikale Trennwand 6 voneinander getrennt sind. Im Bereich der Gasumlenkung zwischen den beiden Leerzügen 4 und 5 verengen sich die Kesselwände 7, 8 trichterförmig. Sie bilden an ihrem unteren Ende eine Öffnung 9 für den Staubaustrag. An den zweiten vertikalen Leerzug 5 schliesst sich der Konvektionsteil 3 des Kessels an. Dieser besteht aus einem horizontalen Bündelzug 10. An der Unterseite des Horizontalzuges 10 sind mehrere Trichter 11 angeordnet.

Gemäss der Erfindung ist im Bereich der Gasumlenkung vom ersten vertikalen Leerzug mit Abwärtsströmung zum zweiten vertikalen Leerzug mit Aufwärtsströmung die Kesselwand als Doppelwand ausgebildet.

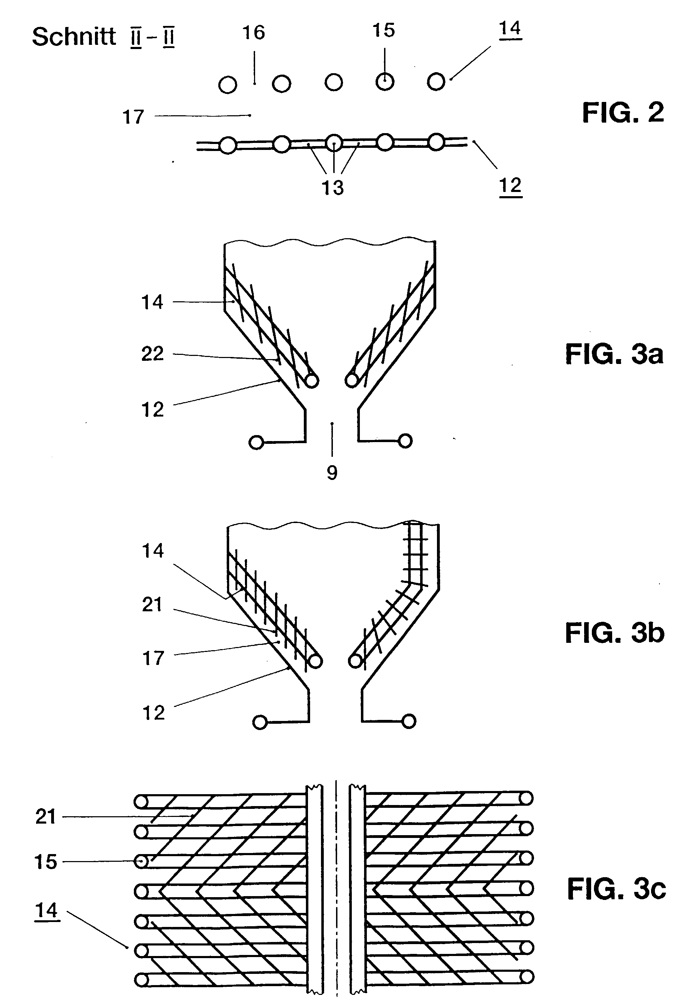

Wie aus dem Schnitt gemäss Fig. 2 zu erkennen ist, besteht die äussere gasdichte Wand 12 aus der im Kesselbau üblichen Rohr-Steg-Rohr-Konstruktion 13. Die innere Wand 14 wird dagegen aus Rohren 15 ohne dazwischen angeordnete Stege gebildet. Die innere Wand kann 14 dabei entweder sowohl an der Frontwand 7 und an der Rückwand 8 angeordnet sein oder auch nur an der Rückwand 8.

Zwischen den Rohren 15 ist jeweils ein Zwischenraum 16 vorhanden. Die innere Wand 14 und die äussere Wand 12 sind so angeordnet, dass sie einen Zwischenraum 17 bilden, der eine strömungsberuhigte Zone darstellt. Die beiden Wände 12, 14 verlaufen weitgehend parallel zueinander und sind im Naturumlaufsystem des Kessels integriert. Sie werden durch verdampfendes Wasser, welches durch die Rohre strömt, gekühlt. Gemäss Fig. 1 sind an der inneren Wand 14 etwa senkrecht zur Gasströmungsrichtung mehrere Schikanenbleche 21 angeordnet, die zwecks Kühlung mit den Rohren 15 verschweisst sind.

Das aus der Brennkammer 1 kommende Abgas 18 strömt zunächst über den ersten vertikalen Leerzug 4 abwärts, wird im Bereich des Trichters umgelenkt, strömt dann im zweiten vertikalen Leerzug 5 aufwärts und gelangt schliesslich in den horizontalen Bündelzug 10, bevor es dann in die hier nicht dargestellte, dem Kessel nachgeschaltete Gasreinigungsanlage strömt.

Das Abgas 18 aus der Brennkammer 1 der Kehrrichtverbrennungsanlage weist relativ viel Staub 19 (ca. 2-5 g/Nm³) auf. Dieser hohe Staubanteil wird mit Hilfe der Erfindung reduziert, wobei die Reduktion des Staubanteiles der Abgase 18 vor dem Eintritt der Abgase 18 in den konvektiven Teil 3 des Kessels und zwar im Bereich der Gasumlenkung vom vertikalen Leerzug 4 mit Abwärtsströmung zum vertikalen Leerzug 5 mit Aufwärtsströmung erfolgt. Durch Schaffung von strömungsberuhigten Zonen 17 infolge der Anordnung einer Doppelwand in diesem Bereich des Kessels wird die Abscheidung des Staubes 19 verbessert. Zusätzliche Verbesserunaen der Staubabscheidung ergeben sich durch die Schikanenbleche 21 bzw. der Leitbleche 22 und durch die Gestaltung der Trennwand 6, die zwischen den vertikalen Gaszügen 4, 5 in Richtung des vertikalen Zuges mit Abwärtsströmung 4 abgewinkelt ist, so dass die Strömung verstärkt an der inneren Wand 14 entlangführt. Vorteilhaft ist, wenn Massnahmen zur Kompensation der bei der Umlenkung der Gasströmung entstehenden Sekundärströmung durchgeführt werden, insbesondere zusätzliche Gaseindüsung und/oder Führung der Gasströmung über Leitbleche.

Der Staub 19, der sich in diesem Bereich abscheidet, wird über die Öffnung 9 abgeführt und mittels Quentchen oder Abkühlen unter Sauerstoffausschluss so abgekühlt wird, dass eine Dioxinbildung unterdrückt wird. Dieser dioxinfreie Staub wird nicht mit dem dioxinhaltigen Flugstaub 20 aus den Trichtern 11 des Horizontalzuges 10 vermischt, so dass wesentlich weniger Umweltprobleme auftreten.

Fig. 3a und 3b zeigen als weitere Ausführungsbeispiele jeweils ein Detail im Bereich des Staubaustrages. Im Unterschied zu Fia. 1 sind gemäss Fig. 3a die Bleche an den Rohren 15 der inneren Wand 14 als Leitbleche 22 ausgeführt und so angeordnet, dass in der strömungsberuhigten Zone 17 eine Gasströmuna in Richtung des Staubaustrittes 9 entsteht. Dadurch wird der Austrag des Staubes verbessert.

In der Ausführungsvariante nach Fig. 3b sind die Bleche 21 fischgratartig an der Wand 14 angeordnet, wie aus der Draufsicht gemäss Fig. 3c gut zu erkennen ist. Durch diese Anordnung wird erreicht, dass die Bleche 21 senkrecht auf der Gasströmung, die durch eine umlenkungsbedingte Sekundärströmung beeinflusst wird, stehen.

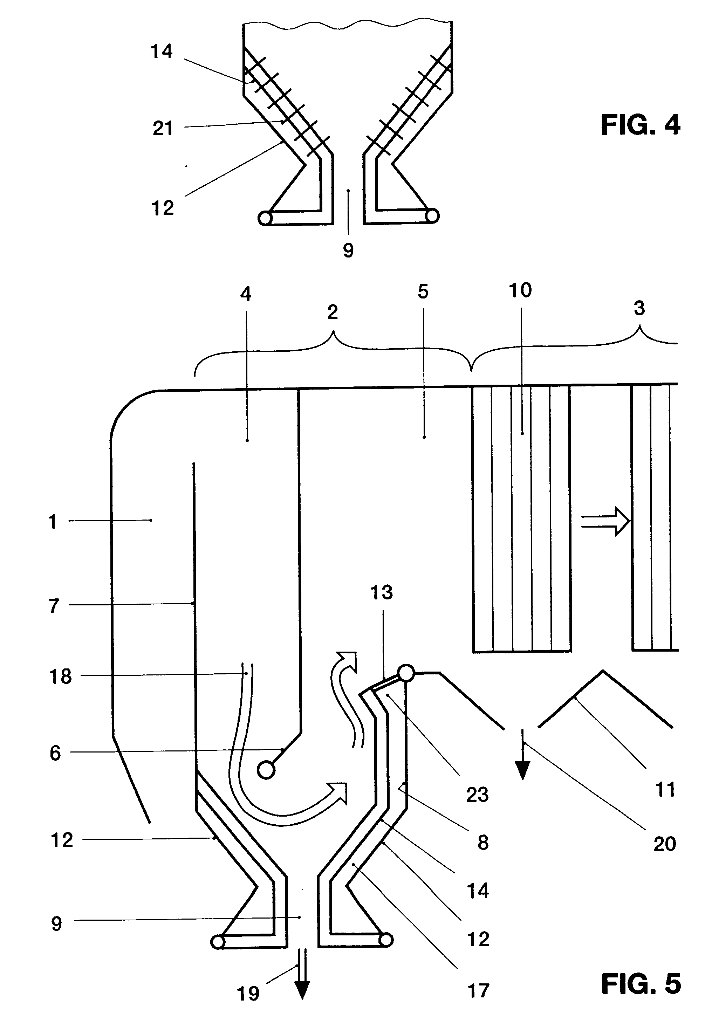

In Fig. 4 ist ein verändertes Detail im Bereich des Staubaustrages dargestellt. Im Vergleich zu Fig. 1 ist eine verbesserte Rohrführung zu erkennen.

Ein weiterer Vorteil der Erfindung besteht darin, dass die innere Wand 14 und die äussere Wand 12 durch Vibrationen leicht zu reinigen sind.

Fig. 5 zeigt eine weitere Ausführungsvariante. Am oberen Ende der Rückwand 8 ist hier die innere Wand 14 in Richtung Trichterinneres ausgekröpft. Der obere Teil der Wand 14 ist so ausgeführt, dass die Rohre 15 durch Verschweissen mit jeweils dazwischen angeordneten Stegen zu einer gasdichten Rohr-Steg-Konstruktion 13 verbunden sind, welche wiederum mit der äusseren Wand 12 verbunden ist, so dass an dieser Stelle eine Staubfangtasche 23 gebildet wird, in der sich der Staub gut absetzen kann.

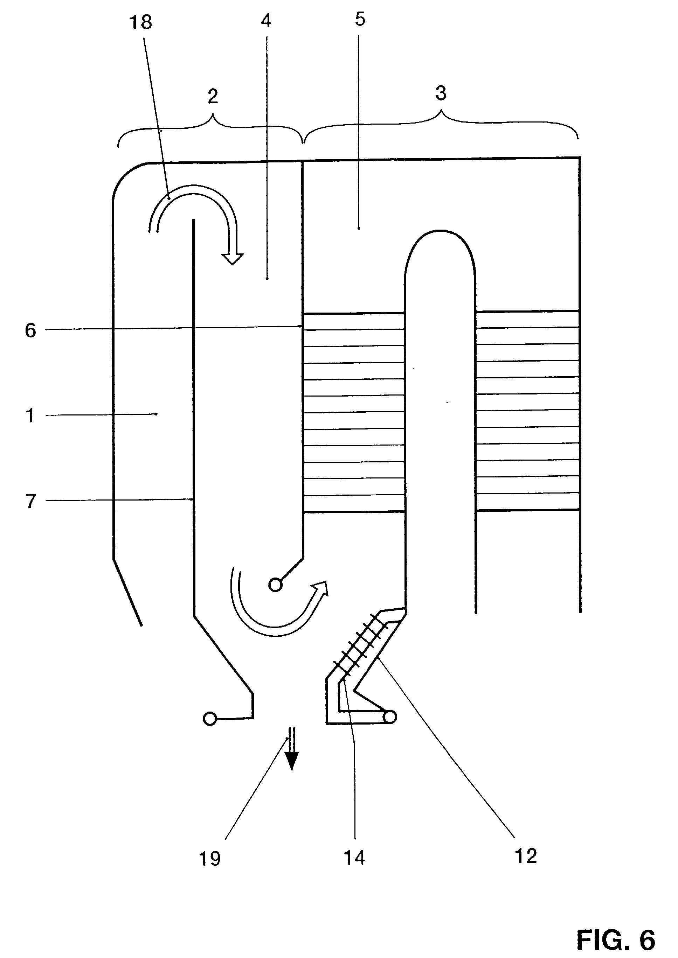

Wie in Fig. 6 dargestellt, ist die Erfindung auch für vertikale Dampferzeuger einsetzbar, bei denen das Abgas 18 vertikal durch den Konvektionsteil 3 strömt.

Selbstverständlich ist die Erfindung nicht auf die bisher gezeigten Ausführungsbeispiele beschränkt. Sie ist auch anwendbar für Dampferzeuger mit Zwangumlaufsystem oder mit Durchlaufsystem.

Da die bisherige Form eines in der Praxis üblichen Kehrrichtverbrennungsanlagen-Kessels nur wenig verändert wird, ist es möglich, die Erfindung auch bei bereits bestehenden Anlagen einzusetzen.

### Bezugszeichenliste

- 1: Brennkammer
- 2: Strahlungsteil
- 3: Konvektionsteil
- 4: erster vertikaler Gaszug
- 5: zweiter vertikaler Gaszug
- 6: Trennwand
- 7: Frontwand
- 8: Rückwand
- 9: Öffnung für Staubaustrag
- 10: horizontaler Bündelzug
- 11: Trichter
- 12: gasdichte äussere Wand
- 13: Rohr-Steg-Rohr-Konstruktion
- 14: innere Wand
- 15: Rohre der inneren Wand
- 16: Zwischenraum zwischen den Rohren der inneren Wand
- 17: Zwischenraum zwischen innerer und äusserer Wand
- 18: Abgas
- 19: dioxinfreier Staub
- 20: dioxinhaltiger Flugstaub
- 21: Schikanenbleche an der inneren Wand
- 22: Leitbleche an der inneren Wand
- 23: Staubfangtasche

## Patentansprüche

1. Verfahren zur Reduktion des Staubgehaltes der staubhaltigen Abgase (18) eines Dampferzeugers, welcher aus einer Brennkammer (1), einem Strahlungsteil (2) und einem Konvektionsteil (3) besteht und mindestens zwei vertikale Gaszüge aufweist, dadurch gekennzeichnet, dass die Reduktion des Staubanteiles der Abgase (18) vor dem Eintritt der Abgase (18) in den konvektiven Teil (3) des Dampferzeugers erfolgt, wobei im Bereich der Gasumlenkung vom vertikalen Zug (4) mit Abwärtsströmung zum vertikalen Zug (5) mit Aufwärtsströmung durch Schaffung von strömungsberuhigten Zonen (17) die Abscheidung des Staubes (19) verbessert wird und der Staub (19) aus diesem Bereich über eine Öffnung (9) abgeführt wird.

2. Verfahren nach Anspruch 1, dadurch gekennzeichnet, dass der aus der Öffnung (9) ausgetragene Staub (19) mittels Quentchen oder Abkühlen unter Sauerstoffausschluss so abgekühlt wird, dass eine Dioxinbildung unterdrückt wird.

3. Verfahren nach Anspruch 1, dadurch gekennzeichnet, dass Massnahmen zur Kompensation der bei der Umlenkung der Gasströmung entstehenden Sekundärströmung durchgeführt werden, insbesondere zusätzliche Gaseindüsung und/oder Führung der Gasströmung über Leitbleche.

4. Vorrichtung zur Reduktion des Staubanteils der Abgase (18) eines Dampferzeugers, wobei der Dampferzeuger aus einer Brennkammer (1), aus einem Strahlungsteil (2) und einem Konvektionsteil (3), sowie einer Frontwand (7) und einer Rückwand (8) besteht und mindestens zwei vertikale Gaszüge (4, 5) aufweist, welche durch eine Trennwand (6) voneinander getrennt sind und der Dampferzeuger im Bereich der Gasumlenkung vom vertikalen Zug (4) mit Abwärtsströmung zum vertikalen Zug (5) mit Aufwärtsströmung eine Öffnung (9) für den Staubaustritt aufweist, dadurch gekennzeichnet, dass im Bereich der Gasumlenkung vom vertikalen Zug (4) mit Abwärtsströmung zum vertikalen Zug (5) mit Aufwärtsströmung die Frontwand (7) und/ oder die Rückwand (8) des Dampferzeugers doppelseitig ausgebildet sind, wobei die äussere Wand (12) aus einer bekannten gasdichten Rohr-Steg-Rohr-Konstruktion (13) und die innere Wand (14) aus Rohren (15) besteht, die so angeordnet sind, dass zwischen den Rohren (15) jeweils ein durchströmbarer Zwischenraum (16) vorhanden ist, wobei von der äusseren Wand (12) und der inneren Wand (14) eine strömungsberuhigte Zone (17) begrenzt ist und wobei die innere (14) und die äussere Wand (12) mittels die Rohre durchstömenden Kühlfluids gekühlt werden.

5. Vorrichtung nach Anspruch 4, dadurch gekennzeichnet, dass die innere und die äussere Wand (12, 14) im Umlaufsystem des Dampferzeugers integriert sind und das Kühlfluid verdampfendes Wasser ist.

6. Vorrichtung nach Anspruch 4, dadurch gekennzeichnet, dass an der inneren Wand (14) im wesentlichen senkrecht zur Strömungsrichtung Schikanenbleche (21) angeordnet sind.

7. Vorrichtung nach Anspruch 4, dadurch gekennzeichnet, dass an der inneren Wand (14) die Schikanenbleche (21) fischgratartig angeordnet sind.

8. Vorrichtung nach Anspruch 4, dadurch gekennzeichnet, dass an der inneren Wand (14) Leitbleche (22) so angebracht sind, dass in der strömungsberuhigten Zone (17) eine Gasströmung in Richtung Staubaustrages (9) entsteht.

9. Vorrichtung nach Anspruch 4, dadurch gekennzeichnet, dass die Trennwand (6) zwischen den vertikalen Zügen (4) und (5) in Richtung des vertikalen Zuges mit Abwärtsströmung (4) abgewinkelt ist.

10. Vorrichtung nach Anspruch 4, dadurch gekennzeichnet, dass am in Strömungsrichtung gesehenen Ende der Rückwand (8) die innere Wand (14) nach innen ausgekröpft ist und im oberen Teil über eine gasdichte Rohr-Steg-Konstruktion (13) mit der äusseren Wand verbunden ist.
